# EUROPEAN PATENT APPLICATION

(11) **EP 4 494 715 A1**
(43) Date of publication of application: **22.01.2025**
(21) Application number: 23791894.1
(22) Date of filing: 19.04.2023
(51) Int. Cl.: A62C 3/02

(54) **FOREST MANAGEMENT DEVICE, FIRE SPREADING PREVENTION SYSTEM, AND FIRE SPREADING PREVENTION METHOD**

(30) Priority: 19.04.2022 JP 2022069076
(71) Applicant: Komatsu Ltd., Minato-ku Tokyo 107-8414 (JP)
(72) Inventor: TOGASHI, Ryoichi, Minato-ku, Tokyo 107-8414 (JP); UENO, Mitsuru, Minato-ku, Tokyo 107-8414 (JP)
(74) Representative: Global IP Europe Patentanwaltskanzlei
(86) International application number: PCT/JP2023/015614
(87) International publication number: WO 2023/204246

(57) **Abstract**

A fire specifying unit is configured to specify a fire area in which a forest fire has occurred. An area determination unit is configured to determine a work area that is located outside a first range including the fire area and that has a predetermined width. A felling instruction unit is configured to instruct a forestry machine to fell a tree in the fire area.

## Description

### [Technical Field]

The present disclosure relates to a forest management device, a fire spreading prevention system, and a fire spreading prevention method.

Priority is claimed on Japanese Patent Application No. 2022-069076, filed April 19, 2022, the content of which is incorporated herein by reference.

### [Background Art]

Patent Document 1 discloses a technology of early discovering a forest fire by analyzing an aerial video using a machine learning technology.

### [Citation List]

### [Patent Document]

[Patent Document 1]
United States Patent Application, Publication No. 2021/0192175

### [Summary of Invention]

### [Technical Problem]

It is known that a forest fire, which has once occurred, spreads and is difficult to extinguish. Therefore, it is required to prevent the spreading of the forest fire. There are two types of fire spreading in the forest, including upper fire spreading from a trunk and branches of a tree and lower fire spreading from grass and trees on a ground surface, and it is necessary to simultaneously prevent both types of fire spreading. In a case in which there is a little grass and few trees on the ground surface, the lower fire spreading may not occur, but it is necessary to prevent at least the upper fire spreading.

An object of the present disclosure is to provide a forest management device, a fire spreading prevention system, and a fire spreading prevention method which can prevent the forest fire from spreading.

### [Solution to Problem]

An aspect of the present disclosure relates to a forest management device including: a fire specifying unit configured to specify a fire area in which a forest fire has occurred; an area determination unit configured to determine a work area that is located outside a first range including the fire area and that has a predetermined width; and a felling instruction unit configured to instruct a forestry machine to fell a tree in the work area.

### [Advantageous Effects of Invention]

According to the above-described aspect, it is possible to prevent the spreading of the forest fire.

### [Brief Description of Drawings]

FIG. 1 is a schematic diagram showing the configuration of a fire spreading prevention system according to a first embodiment.
FIG. 2 is a schematic block diagram showing the configuration of a forest management device according to the first embodiment.
FIG. 3 is an external view of an earthwork machine according to the first embodiment.
FIG. 4 is a configuration diagram showing an appearance of a forestry machine according to the first embodiment.
FIG. 5 is a sequence diagram showing an operation example of the fire spreading prevention system according to the first embodiment.
FIG. 6 is a first example of an instruction screen of the fire spreading prevention system according to the first embodiment.
FIG. 7 is a diagram showing an example of a notification screen of a transport instruction according to the first embodiment.
FIG. 8 is a second example of the instruction screen of the fire spreading prevention system according to the first embodiment.
FIG. 9 is a diagram showing an example of an operation screen displayed on a worker terminal according to a second embodiment.
FIG. 10 is a diagram showing examples of a first range, a second range, and a work area according to the embodiment.
FIG. 11 is a diagram showing examples of the first range, the second range, and the work area according to the embodiment.
FIG. 12 is a diagram showing examples of the first range, the second range, and the work area according to the embodiment.

### [Description of Embodiments]

### <First Embodiment>

### «Configuration of Fire Spreading Prevention System»

Hereinafter, embodiments will be described in detail with reference to the drawings.

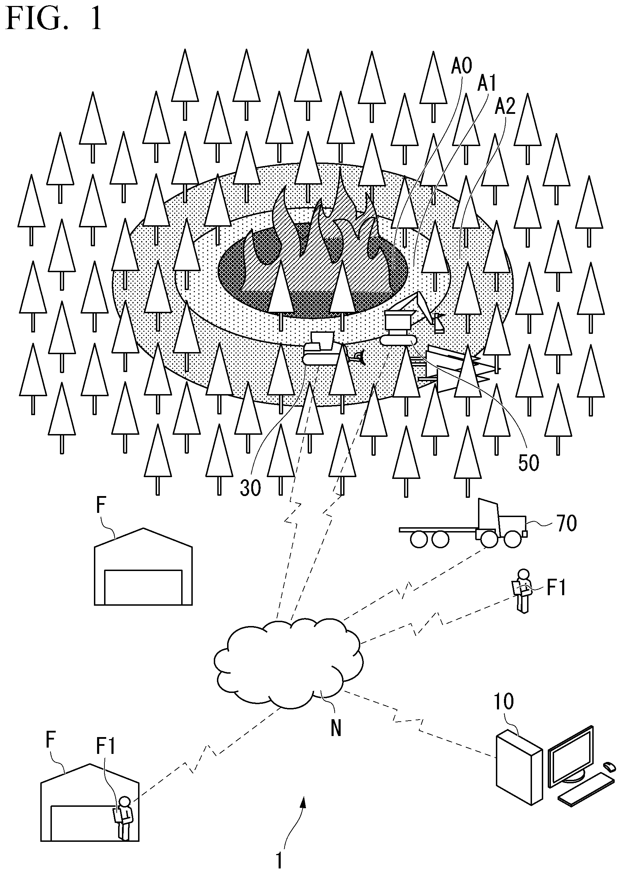

FIG. 1 is a schematic diagram showing the configuration of a fire spreading prevention system according to the first embodiment. In the first embodiment, the fire spreading prevention system 1 monitors a forest fire in a monitoring target area and prevents fire spreading in a case in which the forest fire has occurred. The fire spreading prevention system 1 includes a forest management device 10, an earthwork machine 30, a forestry machine 50, and a transport vehicle 70.

The forest management device 10 is operated by a monitoring officer who monitors the monitoring target area. The forest management device 10 transmits an instruction to the earthwork machine 30 and the forestry machine 50 in a case in which the forest fire has occurred in the monitoring target area, and causes the earthwork machine 30 and the forestry machine 50 to execute measures for preventing the fire spreading. Specifically, the forest management device 10 instructs the forestry machine 50 to fell a tree growing in a donut-shaped work area A2 surrounding a fire area A0 in which the fire has occurred, and instructs the earthwork machine 30 to perform treading down and excavation/dumping of the work area A2. By removing the tree or the grass in the work area A2 before the flame transfers to the tree or the grass, it is possible to prevent the fire spreading. An inner periphery of the work area A2 is away from the fire area A0. This is because the fire spreading cannot be avoided even during the work via the earthwork machine 30 and the forestry machine 50. Therefore, an area located outside an area left unattended A1 having a high possibility of fire spreading during the work is defined as the work area A2. Since the tree should not be felled unnecessarily, an outer periphery of the work area A2 is determined based on the distance from the area left unattended A1. For example, in a case in which a combustible material such as the tree or the grass is removed, the possibility of fire spreading is low in a case in which the distance is 20 meters or more from a fire occurrence position. That is, the work area A2 is an area that is located outside the area left unattended A1 (first range) and inside the area (second range) having a low possibility of fire spreading. The range having a low possibility of fire spreading may be changed depending on the height of the tree, the type of the tree, the strength of the flame, the strength of the wind, the air temperature, the humidity, the weather, a slope of the area, and the like, or may be obtained by simulation in view of these. The forest management device 10 according to another embodiment need not set the area left unattended A1. In this case, the work area A2 is an area that is located outside the fire area A0 (first range) and inside an area having a low possibility of fire spreading.

A plurality of fire departments F are installed in the monitoring target area. The fire department F may be installed by an administrative agency, or may be installed personally by a land owner. Each fire department F is equipped with the earthwork machine 30, the forestry machine 50, and the transport vehicle 70. That is, the fire department F is an example of a holding facility. The fire department F is provided with a worker terminal F1 operated by a worker. The earthwork machine 30 is a vehicle having a function of excavating earth. The forestry machine 50 is a work machine that grips a trunk of the tree and then fell the tree and that can travel while gripping the trunk. As a result, the forestry machine 50 can collect the timber at a predetermined location. The earthwork machine 30 and the forestry machine 50 according to the first embodiment can be autonomously driven. The transport vehicle 70 is a vehicle that can travel with the earthwork machine 30 and the forestry machine 50 loaded on a loading platform. The transport vehicle 70 may be, for example, a towing vehicle (tractor and trailer). The transport vehicle 70 may be operated by the worker or may be autonomously driven. The earthwork machine 30, the forestry machine 50, and the transport vehicle 70 measure the positions via a GNSS and notify the forest management device 10 of the measured positions. As a result, the forest management device 10 can recognize the positions of the earthwork machine 30, the forestry machine 50, and the transport vehicle 70.

### «Configuration of Forest Management Device 10»

The forest management device 10 transmits a transport instruction of the earthwork machine 30 and the forestry machine 50 to the worker terminal F1, and instructs the transported earthwork machine 30 and forestry machine 50 to perform the work.

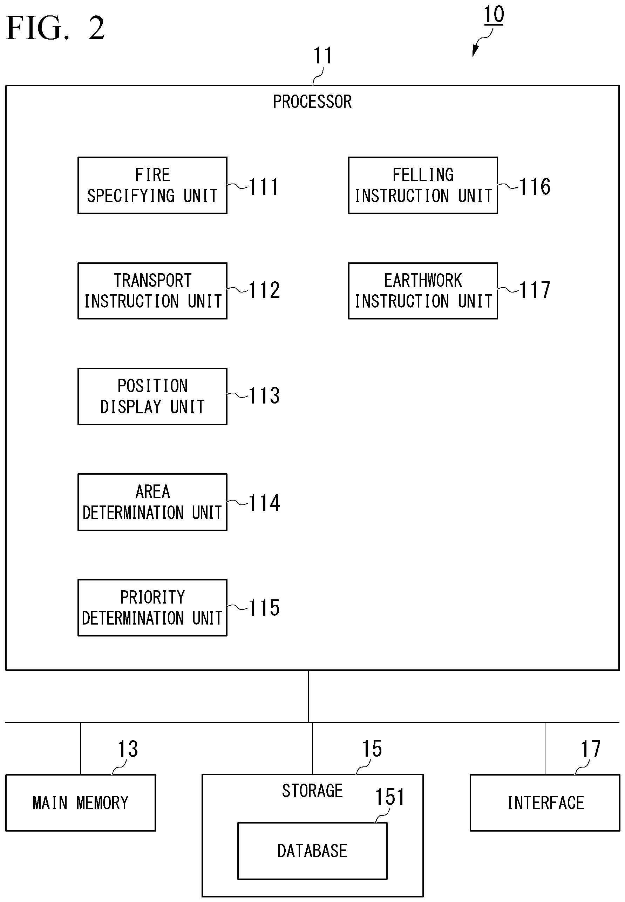

FIG. 2 is a schematic block diagram showing a configuration of the forest management device 10 according to the first embodiment.

The forest management device 10 is a computer including a processor 11, a main memory 13, a storage 15, and an interface 17. The storage 15 stores a program. The processor 11 reads out the program from the storage 15, loads the program in the main memory 13, and executes a process according to the program.

In another embodiment, the forest management device 10 may include a custom large scale integrated circuit (LSI), such as a programmable logic device (PLD), in addition to the above-described configuration or instead of the above-described configuration. Exemplary examples of the PLD include a programmable array logic (PAL), a generic array logic (GAL), a complex programmable logic device (CPLD), and a field programmable gate array (FPGA). In this case, some or all of the functions realized by the processor 11 may be realized by an integrated circuit. The integrated circuit is also included in an example of the processor.

The forest management device 10 is connected to a communication network N via the interface 17. The forest management device 10 is connected to an input/output device (not shown) via the interface 17.

Exemplary examples of the storage 15 include a hard disk drive (HDD), a solid-state drive (SSD), a non-volatile memory, and the like. The storage 15 may be an internal medium directly connected to a bus of the forest management device 10, or may be an external medium connected to the forest management device 10 via the interface 17. The storage 15 is a non-transitory tangible storage medium.

The storage 15 is configured with a database 151 that stores information on the fire department F. Specifically, in the database 151, a position, contact information (for example, a mail address, a telephone number, and the like) of the worker terminal F1, and IDs of the earthwork machine 30, the forestry machine 50, and the transport vehicle 70 are stored in association with each other for each fire department F.

The processor 11 executes the program to function as a fire specifying unit 111, a transport instruction unit 112, a position display unit 113, an area determination unit 114, a priority determination unit 115, a felling instruction unit 116, and an earthwork instruction unit 117.

The fire specifying unit 111 receives a fire occurrence notification from an external fire detection system and specifies the fire area A0 based on information included in the fire occurrence notification. The fire area A0 may be represented by a center point and a radius of the fire, or may be a set of the fire occurrence positions. That is, the fire area A0 may have an irregular shape. The fire detection system detects the occurrence of the fire based on, for example, an aerial video, as in Patent Document 1. The fire occurrence notification includes the fire occurrence position and a fire spreading prediction result. The fire spreading prediction result is represented by a time series of a change in a fire compartment. For example, the fire spreading prediction result may represent a map represented by a global coordinate system as a heat map color-coded for each time point at which the start of the combustion is predicted. In addition, for example, the fire spreading prediction result may be represented as a heat map for each time point color-coded such that the color is changed depending on whether a fire occurrence probability is high or low. The fire spreading prediction is performed based on, for example, the fire occurrence position, a wind direction, a wind speed, the air temperature, the humidity, the strength of the flame, the type of the tree, the weather, the slope of the area, and the like. In another embodiment, the fire specifying unit 111 may perform the fire spreading prediction. In this case, the fire occurrence notification need only include at least the fire occurrence position. In another embodiment, the fire specifying unit 111 may detect the occurrence of the fire based on the aerial video or the like by itself, regardless of the notification from the external fire detection system.

In a case in which the fire specifying unit 111 specifies the fire area A0, the transport instruction unit 112 displays a list of the fire departments F close to the fire area A0 from the database 151 on a display. In a case in which one or more fire departments F are selected from the list by the monitoring officer, the transport instruction that is an instruction to transport the earthwork machine 30 and the forestry machine 50 to the vicinity of the fire area A0 is transmitted to the worker terminal F1 related to the fire department F. In a case in which the worker of the fire department F confirms the transport instruction, the worker can operate the worker terminal F1 to transmit a response to the transport instruction. The response indicates, for example, whether the transport instruction is accepted or rejected. The transport instruction unit 112 receives the response to the transport instruction and displays a reception status of the response on the display. As a result, the monitoring officer can determine whether or not to transmit the transport instruction to the other fire department F based on the reception status of the response.

The position display unit 113 receives position information from the transport vehicle 70 belonging to the fire department F in which a positive response to the transport instruction is made, and displays the map on which the position information is plotted on the display. As a result, the monitoring officer can confirm a transport status of the earthwork machine 30 and the forestry machine 50, to predict a time when the earthwork machine 30 and the forestry machine 50 reach the fire area A0. In addition, the monitoring officer can determine whether or not to request support from the other fire department F depending on the transport status.

The area determination unit 114 determines the work area A2 based on the fire area A0 and the fire spreading prediction result. For example, the area determination unit 114 can determine the work area A2 by the following procedure. First, the area determination unit 114 determines a range in which the fire spreading progresses within an expected work time of the earthwork machine 30 and the forestry machine 50 as the area left unattended A1 based on the fire spreading prediction result. In addition, the area determination unit 114 specifies a range having a low possibility of fire spreading based on the area left unattended A1, the fire spreading prediction result, basic information (wind volume, wind direction, and the like) used for the fire spreading prediction, and the like. Then, the area determination unit 114 determines the work area A2 between the range having a low possibility of fire spreading and the area left unattended A1. The work time of the earthwork machine 30 and the forestry machine 50 is changed depending on an area of the work area A2, and thus a range of the area left unattended A1 and the area of the work area A2 are related to each other. Therefore, the area determination unit 114 may simultaneously determine the area left unattended A1 and the work area A2 by performing iterative operation and the like. In addition, the area determination unit 114 may determine, as the work area A2, an area that is simply radially extended from the fire area A0 by a predetermined distance, regardless of the fire spreading prediction result. In addition, the work area A2 may have any shape as long as the area is located outside the fire area and has a predetermined width.

The priority determination unit 115 determines a work priority for each compartment in a case in which the work area A2 is radially divided into compartments based on the fire spreading prediction result. In another embodiment, the priority determination unit 115 may divide the work area A2 into blocks or other division methods, without being limited to the radial division. The priority determination unit 115 assigns a higher priority to the compartment in which the average time until the combustion phenomenon occurs is shorter in the fire spreading prediction result. In addition, in another embodiment, the priority determination unit 115 may assign a higher priority as a combustion occurrence probability indicated by the fire spreading prediction result is higher. For example, a compartment downwind of the fire area A0 or a compartment uphill from the fire area A0 has a higher priority.

The felling instruction unit 116 transmits a felling instruction that is an instruction to fell the tree in the work area A2 based on the priority determined by the priority determination unit 115 and the work area A2 determined by the area determination unit 114. The felling instruction includes the position information of the work area A2 and the priority of each one of a plurality of compartments constituting the work area A2.

The earthwork instruction unit 117 transmits an earthwork instruction that is an instruction to create an embankment via the excavation/dumping of the ground of the work area A2 based on the work area A2 determined by the area determination unit 114 and the priority determined by the priority determination unit 115. The earthwork instruction includes the position information of the work area A2 and the priority of each one of the plurality of compartments constituting the work area A2. The embankment may be created, for example, on the inner periphery of the work area A2.

### <<Configuration of Earthwork Machine 30>>

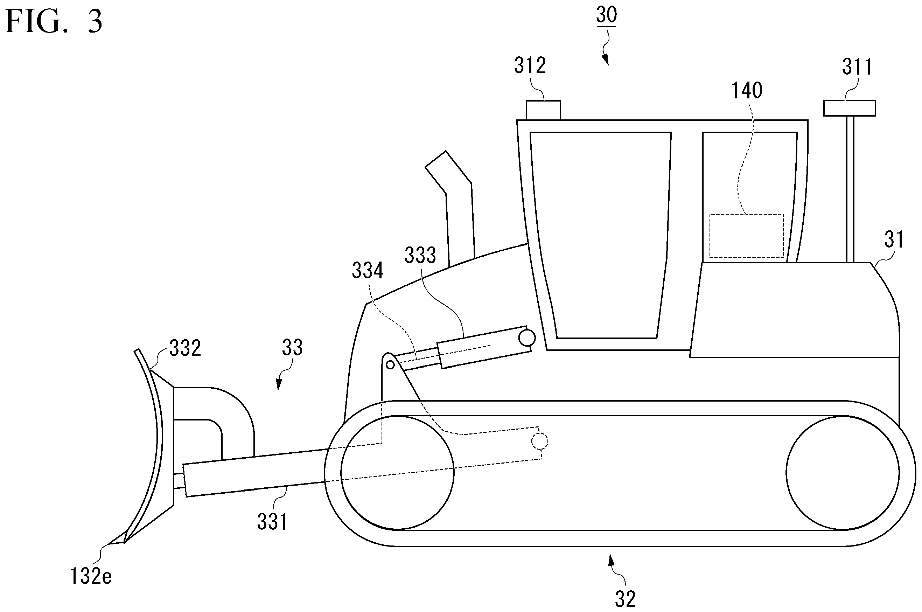

FIG. 3 is an external view of the earthwork machine 30 according to the first embodiment. The earthwork machine 30 may be, for example, a bulldozer that is autonomously driven. In another embodiment, the earthwork machine 30 may be a hydraulic excavator or a wheel loader. The earthwork machine 30 includes a vehicle body 31, an undercarriage 32, work equipment 33, and a control device 34. The vehicle body 31, the undercarriage 32, and the work equipment 33 of the earthwork machine 30 have heat-resistant specifications.

The undercarriage 32 supports the vehicle body 31 to be capable of traveling. The undercarriage 32 is an endless track driven by a power of an engine. Meanwhile, in another embodiment, the undercarriage 32 may include a wheel driven by the power of the engine.

A position measurement device 311 for measuring a position of the vehicle body 31 is provided in the vehicle body 31. The position measurement device 311 includes an antenna that receives a position measurement signal from the GNSS, and measures the position of the vehicle body 31 based on the position measurement signal received via the antenna. The position measurement device 311 outputs position data indicating the measured position to the control device 34. The position of the vehicle body 31 is represented by a three-dimensional global coordinate system. A LiDAR device 312 that measures the distance to an object around the vehicle body 31 is provided in the vehicle body 31. The LiDAR device 312 generates map data in which the distance to a reflection position is mapped by performing scanning with laser light and receiving reflected light. Afire scene is filled with smoke, but the distance to the surrounding object can be measured by penetrating the smoke by using the LiDAR device 312. On the other hand, in a case in which the influence of the smoke can be removed by image correction or the like, the earthwork machine 30 may include another distance measurement device, such as a stereo camera, instead of the LiDAR device 312.

The work equipment 33 is used to excavate and transport an excavation target such as earth or the like. The work equipment 33 is provided at a front portion of the vehicle body 31. The work equipment 33 includes a lift frame 331, a blade 332, and a lift cylinder 333.

Abase end portion of the lift frame 331 is attached to a side surface of the vehicle body 31 via a pin extending in a vehicle width direction. A distal end portion of the lift frame 331 is attached to a back surface of the blade 332 via a ball joint. As a result, the blade 332 is supported to be movable in an up-down direction with respect to the vehicle body 31. A blade edge 332e is provided at a lower end portion of the blade 332. The lift cylinder 333 is a hydraulic cylinder. A base end portion of the lift cylinder 333 is attached to the side surface of the vehicle body 31. A distal end portion of the lift cylinder 333 is attached to the lift frame 331. The lift frame 331 and the blade 332 are raised and lowered by the lift cylinder 333 being expanded and contracted by hydraulic oil.

A stroke sensor 334 that measures a stroke amount of the lift cylinder 333 is provided in the lift cylinder 333. The stroke amount measured by the stroke sensor 334 can be converted into the position of the blade edge 332e with respect to the vehicle body 31. Specifically, a rotation angle of the lift frame 331 is calculated based on the stroke amount of the lift cylinder 333. Since the shapes of the lift frame 331 and the blade 332 are known, the position of the blade edge 332e of the blade 332 can be specified from the rotation angle of the lift frame 331. The earthwork machine 30 according to another embodiment may detect the rotation angle with another sensor such as an encoder or the like.

The control device 34 generates a driving signal for driving the undercarriage 32 and the work equipment 33, and controls actuators of the undercarriage 32 and the work equipment 33. The control device 34 includes a communication device that performs communication with the forest management device 10 via the communication network N. The control device 34 controls the undercarriage 32 and the work equipment 33 based on the earthwork instruction received from the forest management device 10 via the communication network N, current topographical data of the work area A2 acquired in advance, the position data measured by the position measurement device 311, and the position of the blade edge 332e converted from the measurement data of the stroke sensor 334. The control device 34 drives the undercarriage 32 such that the undercarriage 32 moves toward the work area A2 based on the position data. In addition, the control device 34 drives the lift cylinder 333 such that a height of the blade edge 332e reaches a target height (for example, a height below the current topography by a predetermined depth). The control device 34 can create the embankment on the inner periphery of the work area A2 via the excavation/dumping of the ground from the outer peripheral side to the inner peripheral side of the work area A2. In another embodiment, the control device 34 may travel along the periphery of the work area A2 and perform the excavation/dumping of the ground while gradually moving toward the inner peripheral side. The control device 34 may control the work equipment 33 such that the height of the blade edge 332e is lowered by a predetermined distance from the height of a lower surface of the undercarriage 32, without using the current topographical data of the work area A2.

### «Configuration of Forestry Machine 50»

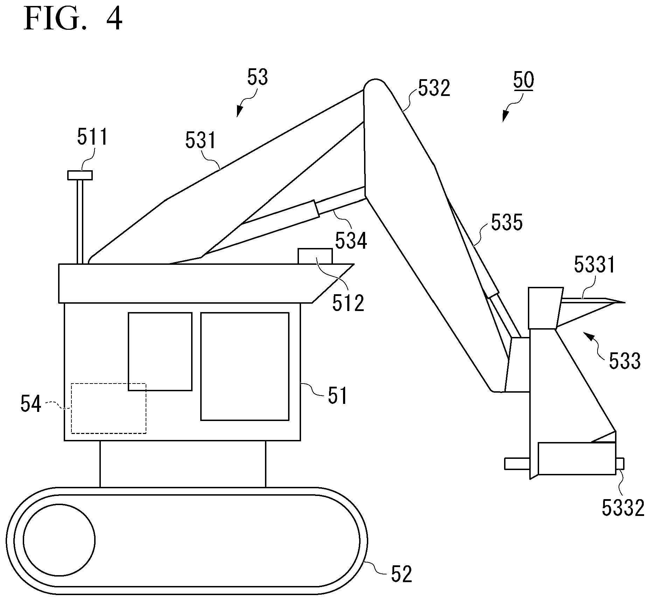

FIG. 4 is a configuration diagram showing an appearance of the forestry machine 50 according to the first embodiment. The forestry machine 50 may be a feller buncher or a harvester that is autonomously driven. The forestry machine 50 includes a vehicle body 51, an undercarriage 52, work equipment 53, and a control device 54. The vehicle body 51, the undercarriage 52, and the work equipment 53 of the forestry machine 50 have heat-resistant specifications.

The undercarriage 52 supports the vehicle body 51 to be capable of traveling. The undercarriage 52 is an endless track driven by a power of an engine. Meanwhile, in another embodiment, the undercarriage 52 may include a wheel driven by the power of the engine.

A position measurement device 511 for measuring a position of the vehicle body 51 is provided in the vehicle body 51. The position measurement device 511 includes an antenna that receives a position measurement signal from the GNSS, and measures the position of the vehicle body 51 based on the position measurement signal received via the antenna. The position measurement device 511 outputs position data indicating the measured position to the control device 54. The position of the vehicle body 51 is represented by a three-dimensional global coordinate system. A LiDAR device 512 that measures the distance to an object around the vehicle body 51 is provided in the vehicle body 51. The LiDAR device 512 generates map data in which the distance to a reflection position is mapped by performing scanning with laser light and receiving reflected light. The fire scene is filled with smoke, but the distance to the surrounding object can be measured by penetrating the smoke by using the LiDAR device 512. On the other hand, in a case in which the influence of the smoke can be removed by the image correction or the like, the forestry machine 50 may include an imaging device, such as a camera, instead of the LiDAR device 512. That is, in another embodiment, the forestry machine 50 may specify the tree that should be felled by analyzing an image captured by the imaging device.

The work equipment 53 is used for gripping and felling the tree. The work equipment 53 is provided at a front portion of the vehicle body 51. The work equipment 53 includes a boom 531, an arm 532, a head 533, an arm cylinder 534, and a head cylinder 535.

The base end portion of the boom 531 is attached to a rear portion of the vehicle body 51. The boom 531 is rotated by a hydraulic motor (not shown). Abase end portion of the arm 532 is attached to a distal end portion of the boom 531 to be rotatable about an axis extending in a width direction of the vehicle body 51. The head 533 is attached to the arm 532 to be rotatable about a first axis extending in the width direction of the vehicle body 51 and rotatable about a second axis orthogonal to the first axis. A grapple 5331 for gripping the tree is provided on an upper portion of the head 533. A circular saw 5332 for felling the tree is provided parallel with the grapple 5331 at a lower portion of the head 533.

The arm cylinder 534 and the head cylinder 535 are hydraulic cylinders. A base end portion of the arm cylinder 534 is attached to the boom 531. A distal end portion of the arm cylinder 534 is attached to the arm 532. The arm 532 is raised and lowered by the arm cylinder 534 being expanded and contracted by the hydraulic oil. A base end portion of the head cylinder 535 is attached to the arm 532. A distal end portion of the head cylinder 535 is attached to the head 533. The head cylinder 535 is expanded and contracted by the hydraulic oil, whereby the head 533 rotates about the first axis.

The control device 54 generates a driving signal for driving the undercarriage 52 and the work equipment 53, and controls actuators of the undercarriage 52 and the work equipment 53. The control device 54 includes a communication device that performs communication with the forest management device 10 via the communication network N. The control device 54 controls the undercarriage 52 and the work equipment 53 based on the felling instruction received from the forest management device 10 via the communication network N, the current topographical data of the work area A2 acquired in advance, the position data measured by the position measurement device 511, and the map data of the LiDAR device 512. The control device 54 causes the undercarriage 52 to travel based on the position data measured by the position measurement device 511. In addition, the control device 54 detects the tree existing in the work area A2 based on the map data generated by the LiDAR device 512, and drives the work equipment 53.

### <<Transport Vehicle 70>>

The transport vehicle 70 may be, for example, a towing vehicle (tractor and trailer). The transport vehicle 70 travels on a public road to the vicinity of the fire occurrence position by loading the earthwork machine 30 or the forestry machine 50 on the transport vehicle 70 at the fire department F. Thereafter, the transport vehicle 70 is stopped to unload the earthwork machine 30 or the forestry machine 50 on the road closest to the fire occurrence position. The transport vehicle 70 may travel to the vicinity of the fire occurrence position via autonomous driving, or may travel to the vicinity of the fire occurrence position via driving of the worker.

### <<Operation of Fire Spreading Prevention System 1»

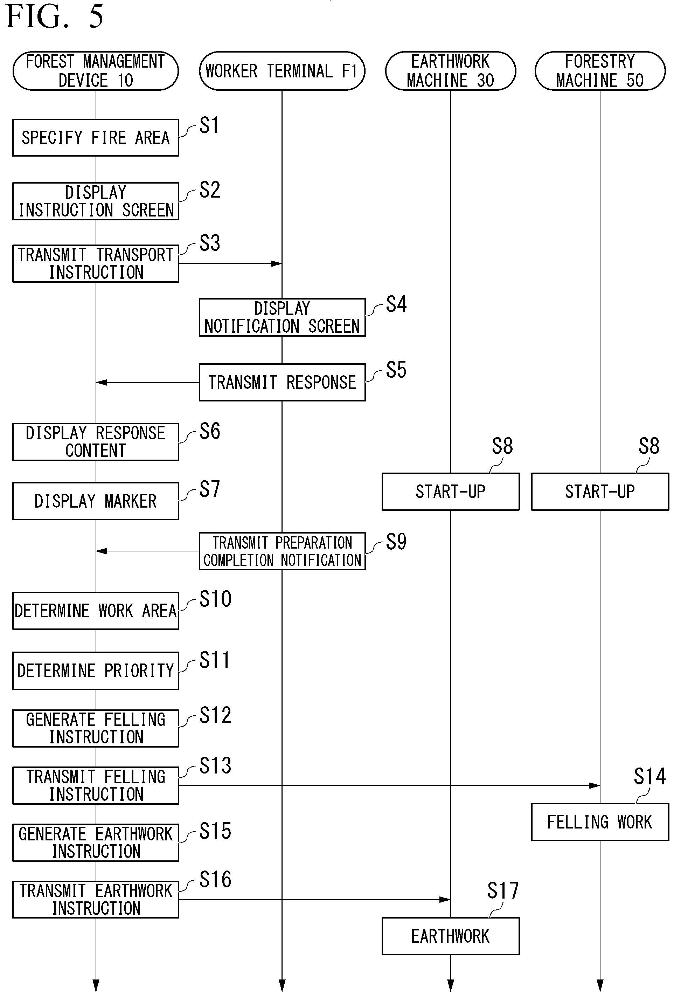

FIG. 5 is a sequence diagram showing an operation example of the fire spreading prevention system 1 according to the first embodiment.

In a case in which the fire occurrence notification is transmitted from the external fire detection system, the fire specifying unit 111 of the forest management device 10 specifies the fire area A0 based on the information included in the fire occurrence notification (step S1). The fire occurrence notification includes the fire occurrence position and the fire spreading prediction result. In a case in which the fire specifying unit 111 performs the fire spreading prediction, the fire occurrence notification need only include at least the fire occurrence position.

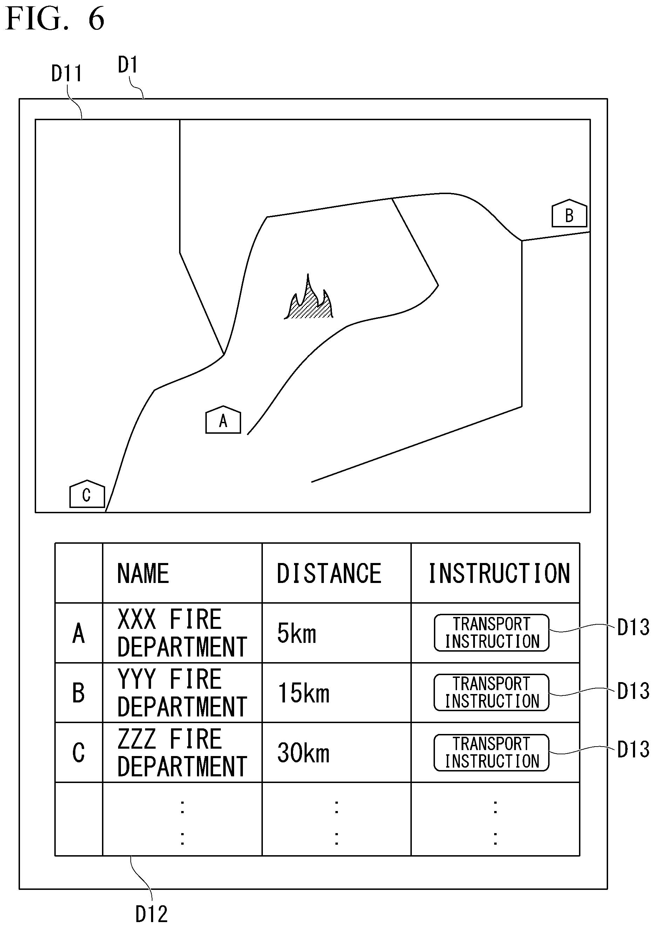

Next, the transport instruction unit 112 generates the list of the fire departments F close to the fire area A0 from the database 151, and displays an instruction screen for transmitting the instruction to the fire department F on the display (step S2). FIG. 6 is a first example of the instruction screen of the fire spreading prevention system 1 according to the first embodiment. An instruction screen D1 includes a map D11 indicating the positions of the fire area A0 and the fire department F, and a list D12 of the fire departments F. The list D12 of the fire departments F includes a name of the fire department F, the distance to the fire area A0, and a transport instruction button D13 for transmitting the transport instruction to the fire department F. The list D12 has an arrangement in an ascending order of the distance to the fire area A0.

The monitoring officer selects one or more fire departments F that issue the instruction for the work in the fire area A0 from the list D12 on the instruction screen D1, and presses the corresponding transport instruction button D13. The transport instruction unit 112 transmits the transport instruction for instructing the worker terminal F1 related to the fire department F corresponding to the pressed transport instruction button D13 to transport the earthwork machine 30 and the forestry machine 50 to the vicinity of the fire area A0 (step S3).

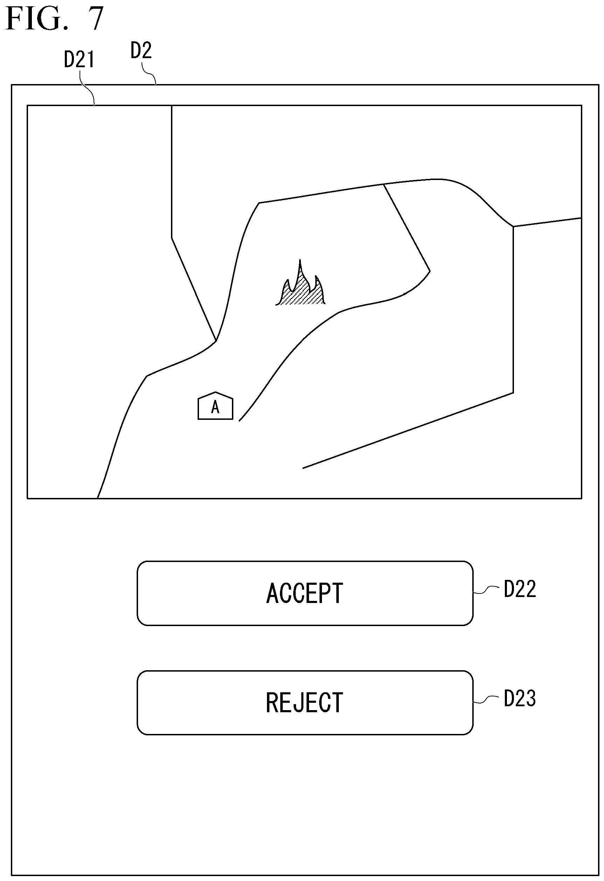

FIG. 7 is a diagram showing an example of a notification screen of the transport instruction according to the first embodiment. In a case in which the transport instruction is received by the worker terminal F1, the worker terminal F1 displays a map D21 indicating the position of the fire area A0 and a notification screen D2 including an accept button D22 and a reject button D23 (step S4). The worker confirms the notification screen D2, and presses the accept button D22 in a case of accepting the transport instruction. The worker presses the reject button D23 in a case of not accepting the transport instruction. In a case in which the accept button D22 or the reject button D23 is pressed, the worker terminal F1 transmits the response to the transport instruction to the forest management device 10 (step S5). The worker who has accepted the transport instruction loads the earthwork machine 30 and the forestry machine 50 on the transport vehicle 70 and moves toward the fire area A0.

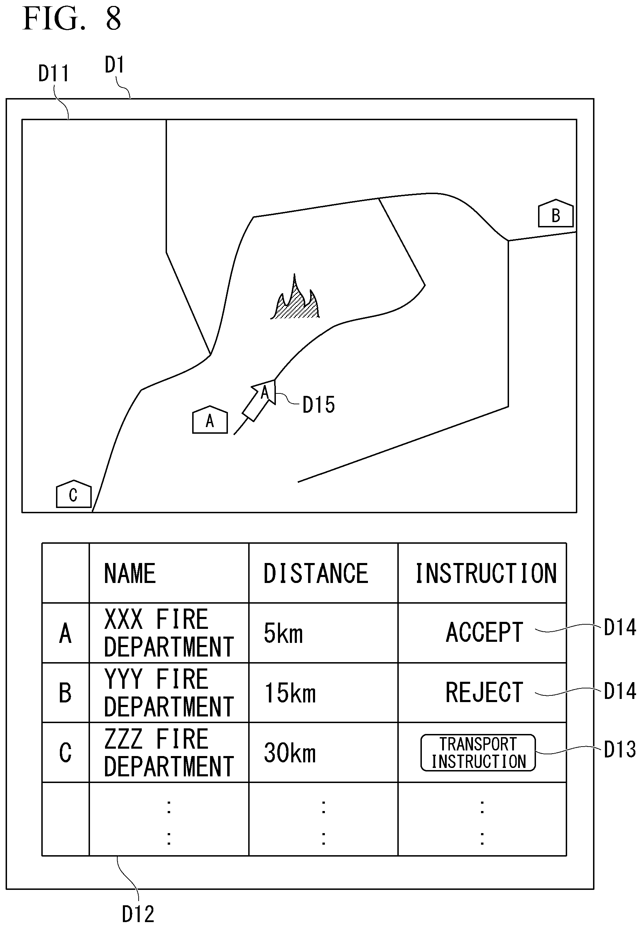

FIG. 8 is a second example of the instruction screen of the fire spreading prevention system 1 according to the first embodiment. In a case in which the response to the transport instruction is received, the transport instruction unit 112 displays a response content D14 with respect to the transport instruction instead of the transport instruction button D13 of the list D12 (step S6). In addition, the position display unit 113 specifies the transport vehicle 70 associated with the fire department F from which the response to acceptance is received, from the database 151. The position display unit 113 receives the position information from the specified transport vehicle 70, and displays a marker D15 indicating the position of the transport vehicle 70 on the map D11 (step S7). A position of the marker D15 is updated at regular time intervals. The position display unit 113 may receive the position information of the earthwork machine 30 or the forestry machine 50 loaded on the transport vehicle 70 and display the position information, instead of the position of the transport vehicle 70.

In a case in which the worker reaches the vicinity of the fire area A0 with the transport vehicle 70, the worker unloads the earthwork machine 30 and the forestry machine 50 from the transport vehicle 70, and starts up the earthwork machine 30 and the forestry machine 50 (step S8). In this case, the worker confirms an interval between the trees in the vicinity of the fire area A0, and determines whether to operate the earthwork machine 30 and the forestry machine 50 independently of each other or to operate the earthwork machine 30 to follow the forestry machine 50. For example, in a case in which the trees densely grow in the fire area A0, it may be difficult to operate the earthwork machine 30 due to the obstruction of the trees. In such a case, by operating the earthwork machine 30 in the compartment in which the tree is felled by the forestry machine 50, it is possible to prevent the earthwork machine 30 from being obstructed by the tree. On the other hand, in a case in which the trees grow with a space therebetween, the earthwork machine 30 can be operated even though the trees are not felled by the forestry machine 50. In such a case, the work time can be shortened by operating the earthwork machine 30 and the forestry machine 50 independently of each other. Next, the worker operates the worker terminal F1 and transmits a preparation completion notification indicating that the preparation for the work is completed to the forest management device 10 (step S9). The preparation completion notification includes information indicating whether or not the earthwork machine 30 is made to follow the forestry machine 50.

In a case in which the forest management device 10 receives the preparation completion notification, the area determination unit 114 determines the work area A2 based on the fire area A0 specified in step S1, the fire spreading prediction result, the basic information (wind volume, wind direction, and the like) used for the fire spreading prediction, and the like (step S10). The area determination unit 114 may receive the latest fire occurrence position and the latest spread prediction result from the fire detection system in a case of receiving the preparation completion notification, to determine the work area A2 based on the latest fire occurrence position and the latest fire spreading prediction result. In addition, the area determination unit 114 may estimate a fire spreading range from when the fire occurrence notification is received to when the preparation completion notification is received based on the fire spreading prediction result received in step S1, update the fire area A0, and determine the work area A2 based on the updated fire area A0. Next, the priority determination unit 115 radially divides the work area A2 and determines the priority of each compartment based on the fire spreading prediction result (step S11).

The felling instruction unit 116 generates the felling instruction that is an instruction to fell the tree in the work area A2 based on the work area A2 determined by the area determination unit 114 and the priority determined by the priority determination unit 115 (step S12). The felling instruction includes the position information of the work area A2 and the priority of each one of the plurality of compartments constituting the work area A2. The felling instruction unit 116 transmits the felling instruction to the forestry machine 50 associated with the worker terminal F1 as a transmission source of the preparation completion notification in the database 151 (step S13).

The control device 54 of the forestry machine 50 that has received the felling instruction starts the work in response to the felling instruction (step S14). Specifically, the control device 54 executes the felling work in the following procedure. The control device 54 specifies a compartment that is not yet started and has the highest priority among the plurality of compartments in the work area A2. The control device 54 causes the undercarriage 52 to travel toward an end on the outer peripheral side of the specified compartment based on the position information measured by the position measurement device 511. The control device 54 causes the undercarriage 52 to travel toward the inner peripheral side of the compartment in a case in which the forestry machine 50 reaches the end on the outer peripheral side of the compartment. While traveling toward the inner peripheral side, the control device 54 detects the tree from the map data generated by the LiDAR device 512. For example, the control device 54 may detect the tree via object matching, or may detect the tree by regarding a cylindrical object extending upward from the map data as the tree. In a case in which the forestry machine 50 includes the imaging device instead of the LiDAR device 512, the control device 54 may detect the tree via pattern matching processing or the like on the captured image. In a case in which the detected tree exists in the work area A2, the control device 54 drives the work equipment 53 to fell the entire tree. The control device 54 executes the above-described operation repeatedly for all the compartments of the work area A2 to perform the felling work. The felled tree is transported to the outside of the work area A2. The transport of the tree may be performed by the forestry machine 50 or may be performed by a collection vehicle such as a forwarder. In a case in which the tree that should be felled is not detected in one compartment, the control device 54 of the forestry machine 50 may notify the forest management device 10 that the work in the compartment is completed. In this case, the forest management device 10 can manage a progress status of the felling work. In a case in which the earthwork machine 30 follows the forestry machine 50, the control device 34 of the earthwork machine 30 can specify a workable compartment based on the progress status of the felling work.

The earthwork instruction unit 117 transmits the earthwork instruction that is an instruction to create the embankment via the excavation/dumping of the ground of the work area A2 (step S15). In a case in which the earthwork machine 30 and the forestry machine 50 are operated independently of each other, the earthwork instruction includes the position information of the work area A2 and the priority of each one of the plurality of compartments constituting the work area A2. In a case in which the earthwork machine 30 is operated to follow the forestry machine 50, the earthwork instruction includes the position information of the work area A2 and a work status of the forestry machine 50 in the plurality of compartments constituting the work area A2. The work status of each compartment takes any value of not-yet-started, during work, and work completion. The earthwork instruction unit 117 transmits the felling instruction to the earthwork machine 30 associated with the worker terminal F1 as the transmission source of the preparation completion notification in the database 151 (step S16).

The control device 34 of the earthwork machine 30 that has received the earthwork instruction starts the work in response to the earthwork instruction (step S17).

Specifically, in a case in which the operation is performed independently of the forestry machine 50, the control device 34 executes the felling work in the following procedure. The control device 34 specifies a compartment that is not yet started and has the highest priority among the plurality of compartments in the work area A2. The control device 34 causes the undercarriage 32 to travel toward the end on the outer peripheral side of the specified compartment based on the position information measured by the position measurement device 311. In a case in which the earthwork machine 30 reaches the end of the outer peripheral side of the compartment, the control device 34 drives the work equipment 33 such that the height of the blade edge 332e is located below the ground surface, and causes the undercarriage 32 to travel toward the inner peripheral side of the compartment. For example, the control device 34 may set a position below a ground contact surface of the undercarriage 32 by a predetermined height as the target height of the blade edge 332e, or may set a position below the current topography acquired in advance by a predetermined height as the target height of the blade edge 332e. In this case, the control device 34 causes the undercarriage 32 to travel such that the blade 332 does not come into contact with the tree based on the map data generated by the LiDAR device 312. As a result, the embankment on the inner peripheral side of the work area A2 can be formed while removing the grass in the work area A2. The control device 54 executes the above-described operation repeatedly for all the compartments of the work area A2 to perform earthwork work.

On the other hand, in a case in which the operation is performed to follow the forestry machine 50, the control device 34 executes the felling work in the following procedure. The control device 34 specifies, among the plurality of compartments of the work area A2, a compartment that is not yet started and in which the work status of the forestry machine 50 is "work completion", drives the work equipment 33 such that the height of the blade edge 332e is located below the ground surface in the compartment, and causes the undercarriage 32 to travel toward the inner peripheral side of the compartment. In a case in which there is no compartment that is not yet started and in which the work status of the forestry machine 50 is "work completion", the control device 54 waits for the work status of the forestry machine 50 to be "work completion" for the compartment that is not yet started. In a case in which the earthwork machine 30 follows the forestry machine 50, the earthwork machine 30 can push out, in addition to the grass in the work area A2, a stump of the tree, a fallen tree, a root, and the like, which are the combustible materials, to the outside of the work area A2 or to the area left unattended A1.

### <<Action and Effect>>

As described above, according to the first embodiment, the forest management device 10 instructs the forestry machine 50 to fell the tree in the work area A2 in a case in which the forest fire has occurred, and instructs the earthwork machine 30 to perform the construction of ground of the work area A2. The work area A2 is an area that is located outside the first range including the fire area A0 and inside the second range including the first range. With the fire spreading prevention system 1, the fire spreading can be prevented in advance from occurring due to the flame that transfers to the tree by felling the tree in the work area A2, and the fire spreading can be prevented in advance from occurring due to the flame that transfers to the grass or shrubs by performing the construction on the ground of the work area A2. That is, with the fire spreading prevention system 1 according to the first embodiment, it is possible to prevent the spreading of the forest fire by removing the combustible material from the periphery of the fire area A0.

The earthwork machine 30 according to the first embodiment performs the dumping of the ground of the work area A2 to generate the embankment. The ground can be dumped to remove the grass or shrubs growing in the ground, and the embankment can be formed by the dumped ground, so that the flame can be prevented from invading the work area A2.

The earthwork machine 30 and the forestry machine 50 according to the first embodiment perform the work according to the priority of compartments constituting the work area A2. As a result, by preferentially processing the compartment with a high possibility of fire spreading, it is possible to reduce the possibility of fire spreading.

### <Second Embodiment>

Both the earthwork machine 30 and the forestry machine 50 that constitute the fire spreading prevention system 1 according to the first embodiment are autonomously driven in response to the instruction of the forest management device 10. On the other hand, one or both of the earthwork machine 30 and the forestry machine 50 constituting the fire spreading prevention system 1 according to the second embodiment may be remotely operated by, for example, the worker terminal F1. Hereinafter, the earthwork machine 30 and the forestry machine 50 will be collectively referred to as a "work machine".

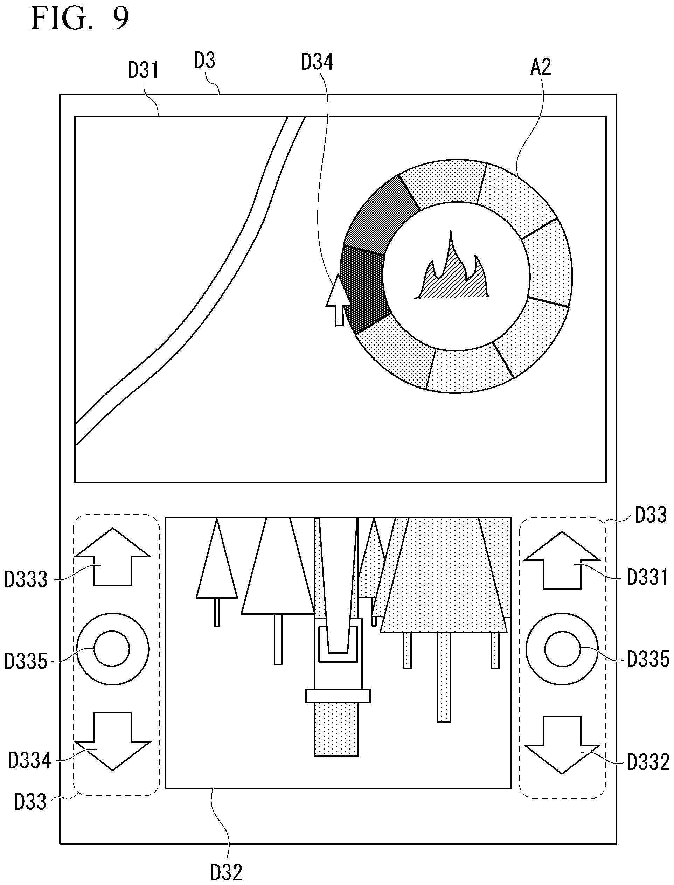

FIG. 9 is a diagram showing an example of an operation screen displayed on the worker terminal F1 according to the second embodiment.

The worker terminal F1 displays an operation screen D3 showing the work area A2. The operation screen D3 includes a map D31 of the work area A2, map data D32 generated by the LiDAR device of the work machine (LiDAR device 312 or LiDAR device 512), and an operation panel D33. A marker D34 indicating a current position and an orientation of the work machine is displayed on the map D31 of the work area A2. In addition, each compartment of the work area A2 in the map D31 is colored according to the priority.

The map data D32 shows a state of a front surface of the work machine. The tree growing in the work area A2 and the tree growing outside the work area A2 are displayed in different aspects in the map data D32. For example, in the map data D32, the tree growing in the work area A2 is colored, and the tree growing outside the work area A2 is not colored. As a result, the worker who operates the forestry machine 50 can easily recognize which tree should be felled.

The operation panel D33 is provided with a forward button D331 of a right track shoe of the undercarriage, a backward button D332 of the right track shoe, a forward button D333 of a left track shoe, a backward button D334 of the left track shoe, and an operation button D335 of the work equipment.

The process of the forest management device 10 according to the second embodiment is the same as the process of the forest management device 10 according to the first embodiment.

As described above, the forest management device 10 according to the second embodiment can easily prevent, in advance, the occurrence of the fire spreading due to the flame that transfers to the tree, the grass, and the like even in a case in which the earthwork machine 30 and the forestry machine 50 are operated by an operator.

The earthwork machine 30 and the forestry machine 50 constituting the fire spreading prevention system 1 according to the second embodiment are both a remotely operated vehicle, but the present disclosure is not limited to this, and the earthwork machine 30 and the forestry machine 50 may be a manned vehicle in which the operator gets. In addition, any one of the earthwork machine 30 and the forestry machine 50 may be autonomously driven.

### <Another Embodiment>

Although the embodiments have been described in detail with reference to the drawings, a specific configuration is not limited to the above-described configuration, and various design changes and the like can be made. That is, in another embodiment, an order of the above-described processes may be changed as appropriate. In addition, some processes may be executed in parallel.

The forest management device 10 according to the above-described embodiment may be configured by a single computer, or may be configured by dividing the configuration of the forest management device 10 and disposing the divided configurations in a plurality of computers, and the plurality of computers may function as the forest management device 10 by cooperating with each other. In this case, some of the computers constituting the forest management device 10 may be mounted inside the earthwork machine 30, the forestry machine 50, or the worker terminal F1, and the other computers may be provided outside.

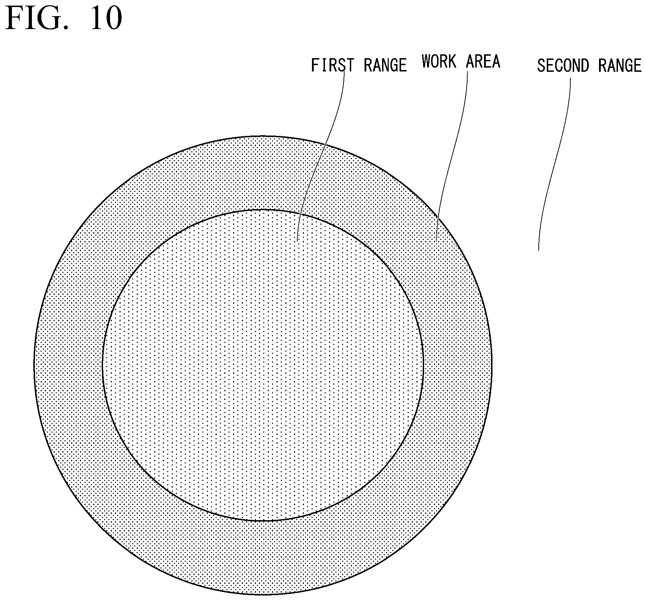

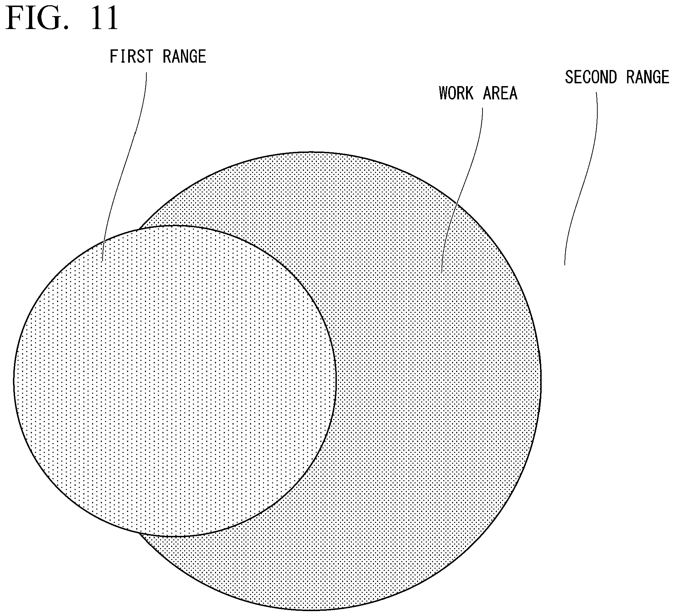

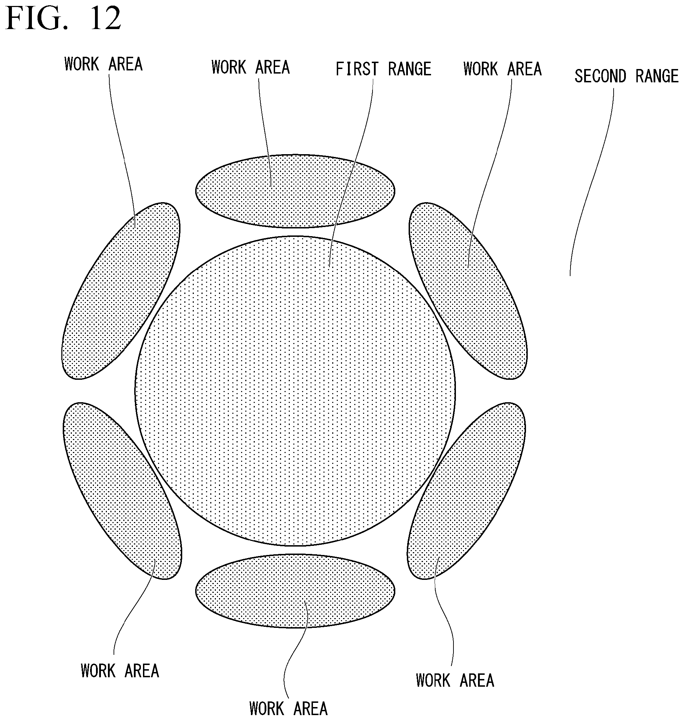

FIGS. 10, 11, and 12 are diagrams showing examples of the first range, the second range, and the work area according to the embodiment. As shown in FIG. 10, the work area determined by the area determination unit 114 may be located outside the first range and inside the second range having a low possibility of fire spreading. As shown in FIG. 10, the second range may include the first range, and the work area may include the first range. As shown in FIG. 11, the work area need not include the first range, and the work area may be wider than the first range. The work area may be narrower than the first range. As shown in FIG. 12, the work area may be configured by a plurality of areas located outside the first range.

In addition, the forest management device 10 according to the above-described embodiment is operated by the monitoring officer, but the present disclosure is not limited to this. For example, the transport instruction unit 112 of the forest management device 10 according to another embodiment may automatically transmit the transport instruction to a predetermined number of fire departments F in the vicinity of the fire area A0 without depending on the scanning of the monitoring officer. In this case, the transport instruction unit 112 may determine whether or not to transmit the transport instruction to the other fire department F based on whether or not the number of accepted responses to the transport instruction indicating the acceptance has reached a predetermined number. In addition, in a case in which there is only one fire department F corresponding to the fire occurrence position, for example, in a case in which the corresponding fire department F is determined for each jurisdiction, the selection of the fire department F through the instruction screen in step S2 may be omitted, and the transport instruction may be automatically transmitted to the fire department F.

In addition, in the forest management device 10 according to the above-described embodiment, the worker of the fire department F transports the earthwork machine 30 and the forestry machine 50, but the present disclosure is not limited to this. For example, in another embodiment, the fire department F need not include the worker terminal F1, and the forest management device 10 may directly transmit the transport instruction to the transport vehicle 70. In addition, in another embodiment, the forest management device 10 may directly transmit the instruction to the earthwork machine 30 and the forestry machine 50, and the earthwork machine 30 and the forestry machine 50 may perform the work in the work area via autonomous driving.

In addition, in an area in which there is a little grass on the ground and the possibility of lower fire spreading is low, it is sufficient that the felling work can be performed, and thus the earthwork machine 30 need not perform the earthwork work.

In addition, the earthwork machine 30 and the forestry machine 50 according to the above-described embodiment include the LiDAR device that is the distance measurement device, but the present disclosure is not limited to this. For example, the earthwork machine 30 or the forestry machine 50 according to another embodiment may further include an infrared camera or a thermal camera in addition to or instead of the LiDAR device. Since the infrared rays are less likely to be scattered or absorbed by the fine particles, the infrared camera can efficiently monitor the surroundings even in a case in which smoke fills the surroundings due to the fire. In addition, since the temperature distribution of the surroundings can be recognized by the infrared camera, the earthwork machine 30 and the forestry machine 50 can check whether or not flying sparks or new sparks have occurred during the fire spreading prevention work. In addition, the earthwork machine 30 and the forestry machine 50 can be equipped with a drone equipped with the infrared camera, and fly the drone over the scene to observe the site from a bird's-eye view. In a case in which the earthwork machine 30, the forestry machine 50, or the drone discovers a new fire source, the machine that has discovered the new fire source can notify the forest monitoring device 10 of the discovery of the fire source, whereby the forest monitoring device 10 can issue an instruction for additional fire extinguishing and fire spreading prevention work.

For example, the fire specifying unit 111 can specify the fire area A0 by receiving captured data of the infrared camera from the earthwork machine 30, the forestry machine 50, the drone, or the like, and matching the captured data with the map represented by the global coordinate system. For example, the fire specifying unit 111 may specify an area in which the temperature represented by the captured data exceeds a predetermined threshold value, as the fire area A0. In addition, the fire specifying unit 111 may specify the fire area A0 by inputting the captured data to a predetermined learned model. In addition, a person may recognize the fire area A0 recognized based on the captured data, and the fire specifying unit 111 may specify the fire area A0 by receiving the input of the fire area A0 from the person. The fire area A0 specified in this way may include an area that is not included in the fire occurrence notification detected by the fire detection system. That is, the fire specifying unit 111 can discover a new fire source from the captured data.

### (Supplementary Note 1)

A forest management device including: a fire specifying unit configured to specify a fire area in which a forest fire has occurred; an area determination unit configured to determine a work area that is located outside a first range including the fire area and that has a predetermined width; and a felling instruction unit configured to instruct a forestry machine to fell a tree in the work area.

### (Supplementary Note 2)

The forest management device according to Supplementary Note 1, further including: an earthwork instruction unit configured to instruct an earthwork machine to perform construction of ground of the work area.

### (Supplementary Note 3)

The forest management device according to Supplementary Note 2, in which the earthwork instruction unit is configured to issue an instruction to generate an embankment via dumping of the ground of the work area.

### (Supplementary Note 4)

The forest management device according to any one of Supplementary Notes 1 to 3, further including: a transport instruction unit configured to instruct a holding facility, in which the forestry machine is held, to transport the forestry machine to the fire area.

### (Supplementary Note 5)

The forest management device according to any one of Supplementary Notes 1 to 4, in which the area determination unit is configured to determine the work area based on fire spreading prediction of the fire area.

### (Supplementary Note 6)

The forest management device according to any one of Supplementary Notes 1 to 5, in which the work area determined by the area determination unit is located outside the first range and inside a second range having a low possibility of fire spreading.

### (Supplementary Note 7)

The forest management device according to any one of Supplementary Notes 1 to 6, in which the work area includes the first range.

### (Supplementary Note 8)

The forest management device according to any one of Supplementary Notes 1 to 7, in which the work area is wider than the first range.

### (Supplementary Note 9)

The forest management device according to any one of Supplementary Notes 1 to 6, in which the work area consists of a plurality of areas.

### (Supplementary Note 10)

The forest management device according to any one of Supplementary Notes 1 to 9, further including: a priority determination unit configured to, when the work area is divided into a plurality of compartments, determine a priority of each one of the plurality of compartments based on fire spreading prediction of the fire area, in which the forestry machine and the earthwork machine perform work according to the priority.

### (Supplementary Note 11)

The forest management device according to any one of Claims 1 to 10, in which the fire specifying unit is configured to specify the fire area based on captured data of an infrared camera configured to image a temperature distribution of a monitoring target area.

### (Supplementary Note 12)

A fire spreading prevention system including: the forest management device according to any one of Supplementary Notes 1 to 11; and the forestry machine.

### [Industrial Applicability]

According to the above-described aspect, it is possible to prevent the spreading of the forest fire.

### [Reference Signs List]

1: Fire spreading prevention system
10: Forest management device
11: Processor
111: Fire specifying unit
112: Transport instruction unit
113: Position display unit
114: Area determination unit
115: Priority determination unit
116: Felling instruction unit
117: Earthwork instruction unit
13: Main memory
15: Storage
151: Database
17: Interface
30: Earthwork machine
31: Vehicle body
311: Position measurement device
312: LiDAR device
32: Undercarriage
33: Work equipment
34: Control device
50: Forestry machine
51: Vehicle body
511: Position measurement device
512: LiDAR device
52: Undercarriage
53: Work equipment
54: Control device
70: Transport vehicle
A0: Fire area
A1: Area left unattended
A2: Work area
F: Fire department
F1: Worker terminal
N: Communication network

## Claims

1. A forest management device comprising:
a fire specifying unit configured to specify a fire area in which a forest fire has occurred;
an area determination unit configured to determine a work area that is located outside a first range including the fire area and that has a predetermined width; and
a felling instruction unit configured to instruct a forestry machine to fell a tree in the work area.

2. The forest management device according to Claim 1, further comprising:
an earthwork instruction unit configured to instruct an earthwork machine to perform construction of ground of the work area.

3. The forest management device according to Claim 2,
wherein the earthwork instruction unit is configured to issue an instruction to generate an embankment via dumping of the ground of the work area.

4. The forest management device according to any one of Claims 1 to 3, further comprising:
a transport instruction unit configured to instruct a holding facility, in which the forestry machine is held, to transport the forestry machine to the fire area.

5. The forest management device according to any one of Claims 1 to 3,
wherein the area determination unit is configured to determine the work area based on fire spreading prediction of the fire area.

6. The forest management device according to any one of Claims 1 to 3,
wherein the work area determined by the area determination unit is located outside the first range and inside a second range having a low possibility of fire spreading.

7. The forest management device according to Claim 6,
wherein the work area includes the first range.

8. The forest management device according to Claim 6,
wherein the work area is wider than the first range.

9. The forest management device according to any one of Claims 1 to 3,
wherein the work area consists of a plurality of areas.

10. The forest management device according to Claim 2, further comprising:
a priority determination unit configured to, when the work area is divided into a plurality of compartments, determine a priority of each one of the plurality of compartments based on fire spreading prediction of the fire area,
wherein the forestry machine and the earthwork machine perform work according to the priority.

11. The forest management device according to any one of Claims 1 to 3,
wherein the fire specifying unit is configured to specify the fire area based on captured data of an infrared camera configured to image a temperature distribution of a monitoring target area.

12. A fire spreading prevention system comprising:
the forest management device according to any one of Claims 1 to 3; and the forestry machine.

13. A fire spreading prevention method comprising:
a step of specifying a fire area in which a forest fire has occurred;
a step of determining a work area that is located outside a first range including the fire area and that has a predetermined width; and
a step of instructing a forestry machine to fell a tree in the work area.
